# EUROPÄISCHE PATENTSCHRIFT

(11) **EP 3 479 458 B1**
(45) Veröffentlichungstag und Bekanntmachung des Hinweises auf die Patenterteilung: **28.07.2021**
(21) Anmeldenummer: 17734291.2
(22) Anmeldetag: 28.06.2017
(51) Int. Cl.: H02K 1/24

(54) **ROTOR, VERFAHREN ZUM HERSTELLEN EINES ROTORS, RELUKTANZMASCHINE UND ARBEITSMASCHINE**
ROTOR, METHOD FOR PRODUCING A ROTOR, RELUCTANCE MACHINE AND WORKING MACHINE
ROTOR, PROCÉDÉ DE FABRICATION D'UN ROTOR, MACHINE À RELUCTANCE ET MACHINE DE TRAVAIL

(30) Priorität: 30.06.2016 DE 102016211841
(43) Veröffentlichungstag der Anmeldung: 08.05.2019
(73) Patentinhaber: Vitesco Technologies Germany GmbH, 30165 Hannover (DE)
(72) Erfinder: SPAS, Sachar, 14199 Berlin (DE)
(74) Vertreter: Waldmann, Georg Alexander
(86) Internationale Anmeldenummer: PCT/EP2017/065975
(87) Internationale Veröffentlichungsnummer: WO 2018/002128

(56) Entgegenhaltungen:
- WO-A2-2013/131795
- US-A1- 2003 111 927
- US-A1- 2007 210 729
- SANADA M ET AL: "Torque ripple improvement for synchronous reluctance motor using asymmetric flux barrier arrangement", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 1, 12. Oktober 2003 (2003-10-12), Seiten 250-255, XP010676030, DOI: 10.1109/IAS.2003.1257510 ISBN: 978-0-7803-7883-4

## Beschreibung

Die Erfindung betrifft einen Rotor, ein Verfahren zum Herstellen eines Rotors, eine Reluktanzmaschine sowie eine Arbeitsmaschine. Die vorliegende Erfindung betrifft insbesondere einen Rotor für eine Reluktanzmaschine, eine Reluktanzmaschine, welche mit dem Rotor ausgebildet ist, sowie ein Fahrzeug.

Im Bereich elektrischer Arbeitsmaschinen werden häufig so genannte Reluktanzmaschinen als Drehstrommaschinen eingesetzt. Diese bestehen aus einem in der Regel außen liegenden Stator mit einer Spulenanordnung und einem vom Stator umgebenden und in dessen Innerem drehbar gelagerten Rotor mit einer Abfolge von Polen und Lücken, die entsprechend einer alternierenden Abfolge von Barrierebereichen mit Magnetflussbarrieren und Polbereichen für den Austritt des magnetischen Flusses gebildet werden.

Auf Grund der Konstruktion von Stator und Rotor und insbesondere wegen des diskreten Aufbaus der Abfolge von Polen und Lücken beim Rotor einerseits und der außen liegenden Zahnung der das Magnetfeld vermittelnden Wicklungen, kommt es im Betrieb zu einer Abhängigkeit des auskoppelbaren Drehmoments von der Winkelstellung des Rotors gegenüber dem Stator. Dies führt zu einer Welligkeit im Verlauf des Drehmoments über dem Drehwinkel und entsprechend in der Bewegung über die Zeit.

Aus der US 2007 0 210 729 A1 ist ein Fahrzeugfahrsystem bekannt. Dabei ist vorgesehen, dass eine elektrische Maschine einen Rotor mit mehreren Schlitzen gemäß dem Oberbegriff des Patentanspruchs 1 aufweist.

Der Erfindung liegt die Aufgabe zu Grunde, einen Rotor für eine Reluktanzmaschine, sowie ein Verfahren zum Herstellen eines Rotors für eine Reluktanzmaschine, anzugeben, bei welchen mit besonders einfachen Mitteln die Drehmomentwelligkeit besonders gering ist.

Die der Erfindung zu Grunde liegende Aufgabe wird bei einem Rotor für eine Reluktanzmaschine erfindungsgemäß mit den Merkmalen des unabhängigen Patentanspruchs 1, bei einem Verfahren zum Herstellen eines Rotors erfindungsgemäß mit den Merkmalen des unabhängigen Patentanspruchs 7. Vorteilhafte Weiterbildungen sind jeweils Gegenstand der abhängigen Ansprüche.

Gemäß einem ersten Aspekt der vorliegenden Erfindung wird ein Rotor für eine Reluktanzmaschine geschaffen mit einem um eine durch einen Rotormittelpunkt verlaufende Rotorachse herum im Wesentlichen kreisscheibenförmigen Rotorkörper und mit einer in Umfangsrichtung des Rotorkörpers alternierenden Abfolge von Barrierebereichen und Polbereichen, wobei jeder Barrierebereich eine Mehrzahl räumlich und materiell getrennter und nicht überlappender Magnetflussbarrieren aufweist und wobei innerhalb mindestens eines Barrierebereichs mindestens eine Magnetflussbarriere mit einer q-Achse und/oder Figuren- oder Symmetrieachse gegenüber einer q-Achse und/oder Figuren- oder Symmetrieachse einer anderen Magnetflussbarriere desselben Barrierebereichs um die Rotorachse oder den Rotormittelpunkt gedreht angeordnet ist.

Ein Kernaspekt der vorliegenden Erfindung besteht also in der neuen Anordnung der einzelnen Magnetflussbarrieren innerhalb eines gegebenen Barrierebereichs des Rotors mit gegeneinander in Bezug auf die Rotorachse oder den Mittelpunkt des zu Grunde liegenden Rotorkörpers gedrehten q-Achsen und/oder Figurenachsen.

Durch das Verdrehen einer oder mehrerer Magnetflussbarrieren innerhalb eines oder mehrerer Barrierebereiche des Rotors wird gezielt eine Asymmetrie des Feldverlaufs des magnetischen Feldes im Rotor und damit eine Asymmetrie der Reluktanz und der Reluktanzkraft, welche auf den Rotor bei Beaufschlagung mit einem externen magnetischen Wechselfeld wirkt, erreicht.

Diese bewusst gewählte Asymmetrie wirkt im Betrieb einer mit einem derartigen Rotor ausgestatteten Reluktanzmaschine mit der diskreten Struktur des äußeren Stators und dessen Wicklung derart zusammen, dass quasi eine Mehrzahl gegeneinander phasenverschobener Drehmomentwelligkeiten entstehen, die in ihrer Summe und Superposition zu einer in der Amplitude insgesamt verringerten Gesamtdrehmomentwelligkeit der mit einem erfindungsgemäßen Rotor ausgestatteten Reluktanzmaschine führen.

Alternativ oder zusätzlich kann ein Kernaspekt der vorliegenden Erfindung auch darin gesehen werden, die Flussstege, also die flusstragenden und/oder flussleitenden Bereiche zwischen den einzelnen Magnetflussbarrieren, die sich im Wesentlichen in Umfangsrichtung im Rotor erstrecken und voneinander im Wesentlichen radial beabstandet sind, mit ihren q-Achsen und/oder Figurenachsen gegeneinander in Bezug auf die Rotorachse und den Rotormittelpunkt gegeneinander verdreht angeordnet sind oder werden.

Die beiden Möglichkeiten des Verdrehens der Magnetflussbarrieren als solche oder der Magnetflussstege können miteinander kombiniert werden.

Im Sinne der Erfindung wird unter einer q-Achse eines Rotors eine Achse senkrecht zur Rotorachse verstanden, die zwischen d-Achsen des Rotors und mithin zwischen Polen als den Bereichen des Austretens der Flusslinien des Rotors liegt.

Bei herkömmlichen Rotoren stimmen die q-Achse eines Barrierebereichs insgesamt und die q-Achsen der einzelnen Magnetflussbarrieren des Barrierebereichs überein und sind mit den Figurenachsen oder Symmetrieachsen der einzelnen Barrierebereiche und der einzelnen Magnetflussbarrieren identisch.

Erfindungsgemäß findet nunmehr eine Rotation mehrerer q-Achsen und/oder Figurenachsen einzelner Magnetflussbarrieren innerhalb eines Barrierebereichs gegeneinander statt, wobei die Drehung um die Rotorachse des zu Grunde liegenden Rotorkörpers und somit im Allgemeinen um den Mittelpunkt des Rotorkörpers, im Schnitt betrachtet, erfolgt.

Erfindungsgemäß wird eine zusätzliche Absenkung der Drehmomentwelligkeit des Rotors dadurch erreicht, dass mehrere Magnetflussbarrieren desselben Barrierebereichs mit ihren q-Achsen und/oder Figurenachse gegenüber einer q-Achse und/oder Figurenachse einer anderen Magnetflussbarriere desselben Barrierebereichs um die Rotorachse gedreht angeordnet sind.

Dabei können die Drehwinkel denselben Wert oder unterschiedliche Werte aufweisen, wobei erfindungsgemäß vorgesehen ist, dass die Drehrichtung der Magnetflussbarrieren eines Barrierebereichs, bezogen auf eine in radialer Richtung des Rotors angeordnete innere Magnetflussbarriere, eine unterschiedliche ist.

Eine weitere Steigerung der Reduktion der Drehmomentwelligkeit stellt sich dann ein, wenn gemäß einer anderen bevorzugten Ausführungsform in mehreren unterschiedlichen Barrierebereichen entsprechende Verdrehungen der Anordnung der einzelnen Magnetflussbarrieren erfolgt.

So ist es besonders vorteilhaft, wenn ein oder mehrere Magnetflussbarrieren unterschiedlicher Barrierebereiche mit ihren q-Achsen und/oder Figurenachse gegenüber einer q-Achse und/oder Figurenachse einer anderen Magnetflussbarriere eines jeweils selben Barrierebereichs um die Rotorachse gedreht angeordnet sind.

Auch dabei können die Drehwinkel denselben Wert oder unterschiedliche Werte aufweisen und/oder die Drehrichtung kann dieselbe oder eine unterschiedliche sein, und zwar jeweils verglichen mit entsprechenden Drehwinkeln bzw. Drehrichtungen ein oder mehrere anderer Barrierebereiche.

Bei einer vorteilhaften Weiterbildung des erfindungsgemäßen Rotors ist eine gerade Anzahl von Barrierebereichen ausgebildet. Entsprechend liegt dann auch eine gerade Anzahl von Polen vor.

Besonders einfache Produktionsverhältnisse stellen sich bei der Herstellung des erfindungsgemäßen Rotors dann ein, wenn gemäß einer bevorzugten Ausgestaltungsform - trotz dem beabsichtigten Aufprägen der Magnetflussasymmetrie - unterschiedliche Barrierebereiche als Ganzes bis auf eine Drehung um die Rotorachse zueinander identisch und/oder zu einer Achse spiegelsymmetrisch sind, insbesondere in Bezug auf zur Deckung gebrachter q-Achsen oder Figuren- oder Symmetrieachsen der Barrierebereiche als Ganzes.

Es lässt sich der erfindungsgemäße Aufbau des Rotors bei unveränderter Reduktion der Drehmomentwelligkeit vereinfachen, wenn eine Magnetflussbarriere eines Barrierebereichs zu ihrer q-Achse und/oder Figurenachse spiegelsymmetrisch aufgebaut ist. Alternativ ist ein asymmetrischer Aufbau bezüglich einer q-Achse denkbar, um dadurch die Drehmomentwelligkeit weiter abzusenken.

Ein besonders hohes Maß an Gleichlauf im Sinne der Reduzierung der Drehmomentwelligkeit stellt sich dann ein, wenn die Drehwinkel und/oder die Drehrichtungen der jeweiligen q-Achsen und/oder Figurenachsen aufeinander im Sinne einer Optimierung abgestimmt sind oder werden.

So ist es gemäß einer besonders bevorzugten Weiterbildung des erfindungsgemäßen Rotors vorgesehen, dass Drehwinkel und/oder Drehrichtungen von q-Achsen und/oder Figurenachsen gegenüber q-Achsen und/oder Figurenachsen anderer Magnetflussbarrieren so gewählt sind, dass sich im Betrieb des Rotors im Vergleich zu einem Rotor mit einer Konfiguration ohne Verdrehung von Magnetflussbarrieren eine verringerte und insbesondere minimale Drehmomentwelligkeit einstellt.

Gemäß einem anderen Aspekt der vorliegenden Erfindung wird ein Verfahren zum Herstellen eines Rotors mit der erfindungsgemäßen Struktur angegeben, bei welchem Drehwinkel und/oder Drehrichtungen von q-Achsen und/oder Figurenachsen gegenüber q-Achsen und/oder Figurenachsen anderer Magnetflussbarrieren so gewählt werden, dass sich im Betrieb des Rotors im Vergleich zu einem Rotor mit einer Konfiguration ohne Verdrehung von Magnetflussbarrieren eine verringerte und insbesondere minimale Drehmomentwelligkeit einstellt.

Ferner ist Gegenstand der vorliegenden Erfindung auch eine Reluktanzmaschine mit einem Stator zur Erzeugung eines primären Magnetfeldes und/oder zum Induzieren eines sekundären Magnetfeldes und mit einem erfindungsgemäßen Rotor.

Der erfindungsgemäße Rotor ist bei einer Ausführungsform in der Reluktanzmaschine drehbar zur Drehung um die Rotorachse gelagert und vom Stator zur magnetischen Wechselwirkung umgeben.

Alternativ kann die Reluktanzmaschine als Außenläufermaschine ausgebildet sein und in seinem Inneren den Stator aufweisend umgeben.

Auf Grund der erfindungsgemäßen Ausgestaltung des zu Grunde liegenden Rotors kann die erfindungsgemäße Reluktanzmaschine mit einer beliebigen Wicklungstopologie ausgebildet werden und zeigt dennoch sämtliche Vorteile, die Reluktanzmaschinen als Drehstrommaschinen offerieren.

Insbesondere ist es erfindungsgemäß möglich, bei der Verwendung des erfindungsgemäßen Rotors auch einen Stator mit einer konzentrierten Wicklung einzusetzen.

Üblicherweise entstehen bei der Verwendung konzentrierter Wicklungen Maschinentopologien mit einer geringen Anzahl von Zähne und Nuten für jeden Pol. Mit geringerer Anzahl von Zähnen und Nuten für jeden Pol steigt die Drehmomentwelligkeit, weil dadurch die Nutharmonischen des magnetischen Feldes im Luftspalt der Maschine anwachsen. Die Nutharmonischen sind maßgeblich an der Drehmomentwelligkeit beteiligt.

Bekannte Verfahren haben nicht genügend Freiheitsgrade, um die durch die Wicklungsart bedingte erhöhte Welligkeit soweit zu reduzieren, dass ein gewinnbringender Einsatz denkbar wäre.

Die erfindungsgemäße Reluktanzmaschine kann als Motor und/oder als Generator oder als Teil eines Motors und/oder Generators ausgebildet sein und eingesetzt werden.

Gemäß einem weiteren Aspekt der vorliegenden Erfindung wird eine Arbeitsmaschine unter Verwendung einer erfindungsgemäßen Reluktanzmaschine als Motor und/oder Generator oder als Teil eines Motors und/oder Generators geschaffen.

Die Arbeitsmaschine kann insbesondere als Fahrzeug ausgebildet sein, wobei dann die verwendete Reluktanzmaschine Teil eines Antriebs zur Fortbewegung oder eines anderen Aggregats sein kann.

Weitere Einzelheiten, Vorteile und Merkmale der vorliegenden Erfindung ergeben sich aus nachfolgender Beschreibung von Ausführungsbeispielen anhand der Zeichnung.
- Figur 1: zeigt eine schematische Querschnittsansicht, die ein Beispiel einer Reluktanzmaschine unter Verwendung eines Rotors zeigt, das nicht zur Erfindung gehört, wobei der Querschnitt senkrecht zur Rotationsachse liegt.
- Figur 2: zeigt in Querschnittsansicht eine Ausführungsform eines Rotors, der nicht zur Erfindung gehört.
- Figur 3: verdeutlicht anhand einer schematischen und abgewickelten Ansicht bei einer Ausführungsform des erfindungsgemäßen Rotors die Lage der q-Achsen der Magnetflussbarrieren relativ zueinander.
- Figur 4: zeigt anhand einer schematischen Querschnittsansicht eine Ausführungsform eines erfindungsgemäßen Rotors.
- Figuren 5 bis 10: demonstrieren anhand von Querschnittsdarstellungen bzw. in Form von Graphen zu Simulationsergebnissen Vorteile, die bei erfindungsgemäßen Reluktanzmaschinen unter Verwendung von Ausführungsformen des erfindungsgemäßen Rotors erzielt werden können.
- Figur 11: zeigt in schematischer Querschnittsansicht eine andere Ausführungsform des erfindungsgemäßen Rotors zur Verdeutlichung eines Verfahrens zum Ausgestalten der Magnetflussbarrieren.
- Figuren 12 bis 14: sind schematische Ansichten zur Erläuterung des Begriffes der q-Achse bei einer einzelnen Magnetflussbarriere.

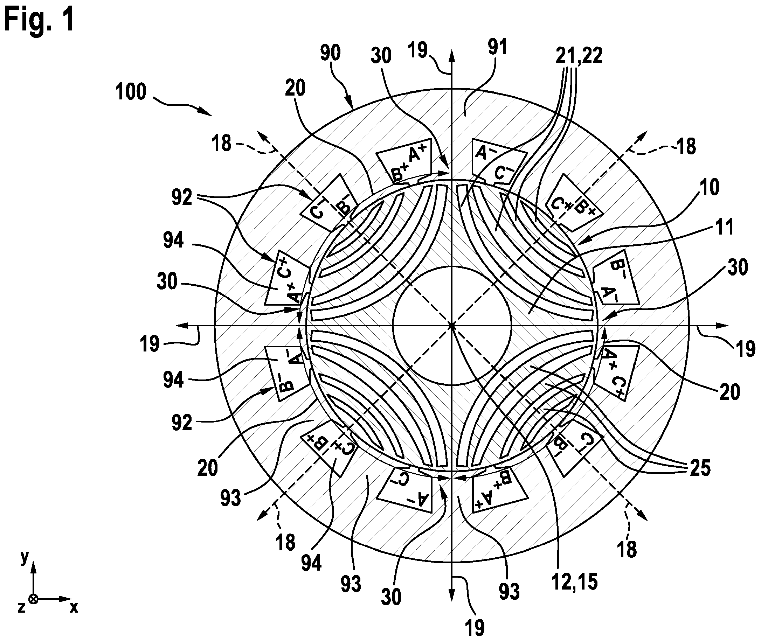

Nachfolgend werden unter Bezugnahme auf die Figuren 1 bis 14 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in Querschnittsansicht senkrecht zur Rotationsachse eines Beispiels einer Reluktanzmaschine 100, das nicht zur Erfindung gehört, mit einem außen angeordneten Stator 90 mit Statorkörper 91 und Spulen 92. Im Inneren des Stators 90 ist drehbeweglich zur Rotation um die Rotorachse 12 ein Rotor 10 mit einem Rotorkörper 11 angeordnet. Durch die Rotorachse 12 wird in der Querschnittsansicht gemäß Figur 1 der Rotormittelpunkt 15 definiert, der auch als Mittelpunkt M des Rotors 10 bezeichnet werden kann.

Bei dem in Figur 1 dargestellten Beispiel besitzt der Stator 12 Spulen und ist hier 12-zahnig und mit 12 Nuten sowie 4 Polen ausgebildet. Es handelt sich also um eine 12/4-Reluktanzmaschine.

Der innen angeordnete Rotor 10 besitzt bei der beispielhaften Ausführungsform gemäß Figur 1 vier Polbereiche 30 für den Austritt des Magnetflusses, wobei die Polbereiche 30 einen Winkelabstand von 90° zueinander aufweisen.

Zwischen den Polbereichen 30 sind durch die Strukturierung des Rotorkörpers 11 Barrierebereiche 20 ausgebildet mit einer Mehrzahl von Magnetflussbarrieren 21 und 22. Zwischen den jeweiligen Magnetflussbarrieren 21 und 22 sind Magnetflussstege 25 ausgebildet. Senkrecht zur Verlaufsrichtung der Magnetflussstege 25 und somit im Wesentlichen auch senkrecht zum Verlauf der Magnetflussbarrieren 21, 22 ist bei der in Figur 1 dargestellten Struktur der magnetische Widerstand, auch als Reluktanz bezeichnet, vergleichsweise groß, wogegen er in Verlaufsrichtung der Magnetflussstege 25 vergleichsweise gering ist, so dass im Betrieb der Magnetfluss parallel zu den Magnetflussstegen 25 und in Richtung der Polbereiche 30 geführt wird und dort austritt.

Das Zentrum des Austritts des magnetischen Flusses im Polbereich 30 definiert die so genannte d-Achse 19 (aus dem Englischen d : "direct") des Rotors 10, jeweils in Relation zum Rotormittelpunkt 15. Zwischen zwei in Umfangsrichtung direkt benachbarten d-Achsen 19 oder Polbereichen 30 entsteht jeweils eine so genannte magnetische Lücke, definiert durch den jeweiligen Barrierebereich 20, in dessen Zentrum eine q-Achse 18 (aus dem Englischen q : "quadrature") des Rotors 10 definiert ist, in welcher der magnetische Fluss nicht aus dem Rotor 10 austritt.

Bei der Ausführungsform gemäß Figur 1 sind die einzelnen Magnetflussbarrieren 21 und 22 als solche symmetrisch zu ihren eigenen q-Achsen 13, 14 ausgebildet, aber gegeneinander in Bezug auf die Rotorachse 12 und den Rotormittelpunkt 15 um bestimmte Winkel verdreht. In Bezug auf die Rotorachse 12 direkt gegenüberliegende Barrierebereiche 20 des Rotors 10 aus Figur 1 sind zueinander punktsymmetrisch zum Mittelpunkt 15 des Rotors 10 ausgebildet und angeordnet.

In Figur 1 liegt die Rotorachse 12 parallel zur z-Richtung, die Schnittebene liegt parallel zur xy-Ebene.

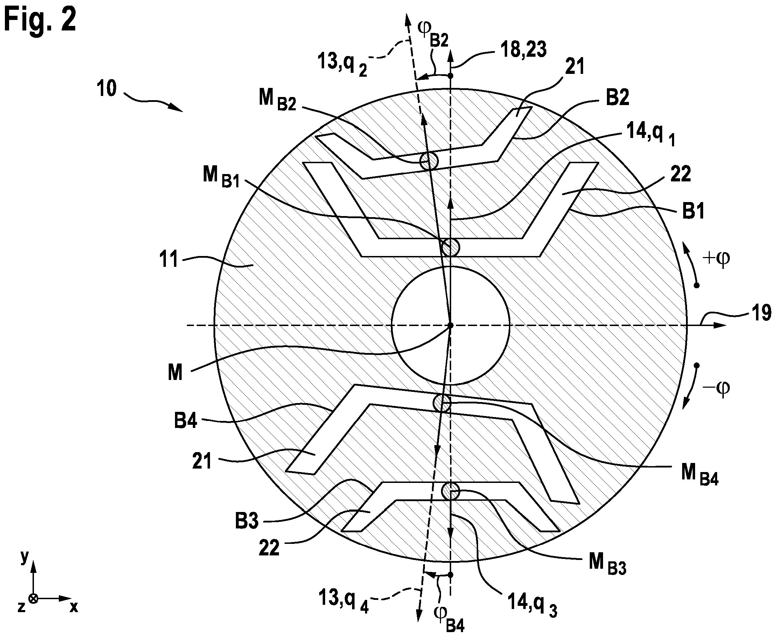

Zur Erläuterung der Kernaspekte der vorliegenden Erfindung, nämlich der Verdrehung einzelner Magnetflussbarrieren in Bezug auf den Rotormittelpunkt 15 zueinander innerhalb ein- und desselben Barrierebereichs 20, wird auf die vereinfachte Darstellung gemäß Figur 2 verwiesen.

Diese zeigt in schematischer und geschnittener Ansicht mit Schnittebene senkrecht zur Rotorachse 12 eine Ausführungsform des erfindungsgemäßen Rotors 10 mit Rotorkörper 11 und zwei Barrierebereichen 20 mit jeweils zwei Magnetflussbarrieren 21 bzw. 22.

Wieder liegt die Rotorachse 12 parallel zur z-Richtung, die Schnittebene liegt parallel zur xy-Ebene.

Zur übersichtlicheren Darstellung sind die Magnetfeldbarrieren 21 und 22 mit den Symbolen B1 bis B4 bezeichnet. Die Magnetfeldbarrieren 21, 22 des Rotors 10 aus Figur 2 sind sämtlich für sich genommen symmetrisch ausgebildet, und zwar zu ihrer jeweiligen q-Achse 13 bzw. 14, die ihrerseits entsprechend mit q1 bis q4 bezeichnet sind.

Bei der in Figur 2 dargestellten Beispiel sind die Magnetflussbarrieren B1 und B3 nicht gedrehte Magnetflussbarrieren 21, das heißt, ihre q-Achsen 14 bzw. q1 und q3 korrespondieren direkt mit der q-Achse 18 des Rotors 10.

Dem gegenüber sind die Magnetflussbarrieren B2 und B4 als gedrehte Magnetflussbarrieren 22 ausgebildet, so dass ihre q-Achsen 13 bzw. q2 und q4 gegenüber der q-Achse 18 des Rotors 10 um einen Rotationswinkel ϕB2 bzw. ϕB4 in positiver bzw. negativer Drehrichtung um die Rotorachse 12 gedreht sind.

In Figur 2 hat somit jede der Magnetflussbarrieren B1 bis B4 als gedrehte Magnetflussbarriere 21 oder als nicht gedrehte Magnetflussbarriere 22 ihre jeweilige eigene q-Achse q1 bis q4. Um diese Achsen q1 bis q4 sind die jeweiligen Barrieren B1 bis B4 als gedrehte Magnetflussbarriere 22 oder als nicht gedrehte Magnetflussbarriere 21 symmetrisch ausgebildet.

Dies ist jedoch nicht zwingend, es können vielmehr auch asymmetrische, das heißt nicht zu ihrer jeweiligen q-Achse symmetrische Magnetflussbarrieren, verwendet werden.

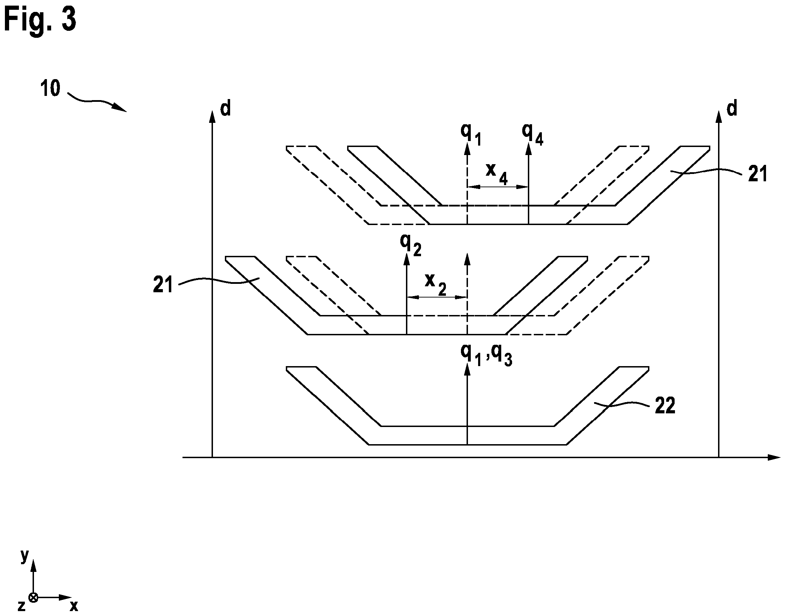

Figur 3 zeigt in schematischer Ansicht Details der Verdrehung von q-Achsen q2 bzw. q4 als q-Achsen gedrehter Magnetflussbarrieren 22 in einer abgewickelten Darstellung. In dieser abgewickelten Darstellung ergeben die Drehungen um die Winkel ϕB2 bzw. ϕB4 Verschiebungen x2, x4 in Umfangsrichtung (in der dortigen Darstellung parallel zur Abszisse), das heißt senkrecht per Verbindungslinie zwischen benachbarten d-Achsen.

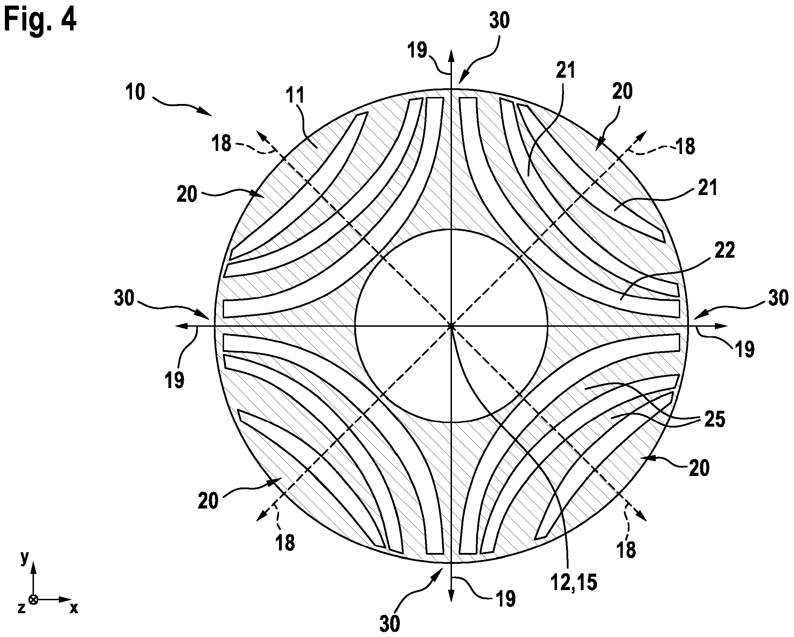

Figur 4 zeigt eine Ausführungsform eines erfindungsgemäßen Rotors 10 unter Verwendung von vier Barrierebereichen 20 mit jeweils drei Magnetflussbarrieren 21.

Die Magnetflussbarrieren 21 sind bei dieser Ausführungsform untereinander innerhalb eines jeweiligen Barrierebereichs 20 und auch in Bezug auf die anderen Barrierebereiche 20 jeweils unterschiedlich gegeneinander verdreht, so dass sich hier eine Art maximale Variation einstellt.

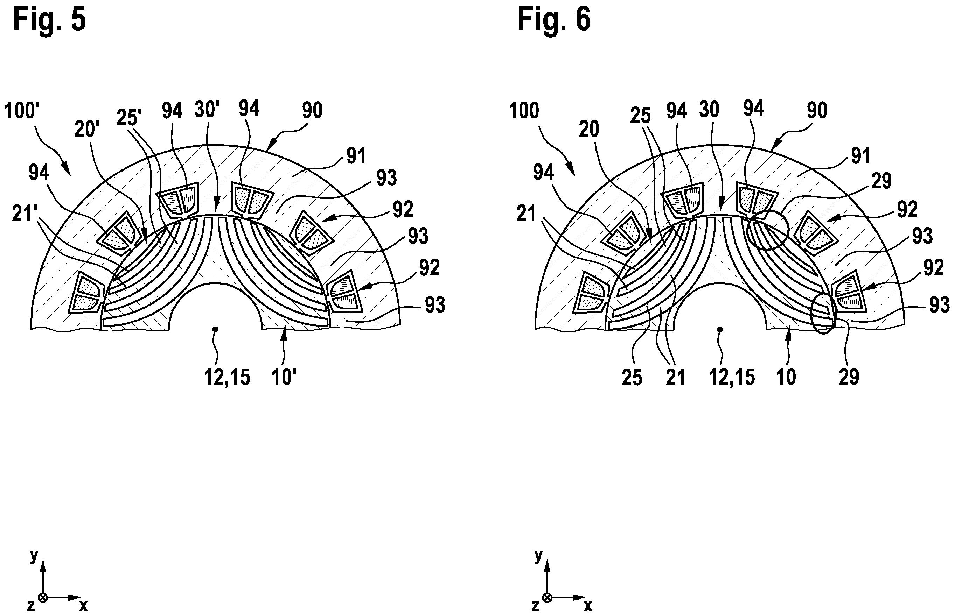

Die Figuren 5 bis 10 zeigen anhand schematischer Querschnittsansichten bzw. Graphen zu Simulationsdaten die erfindungsgemäß erzielbaren Vorteile im Vergleich zu den Ergebnissen bei der Verwendung herkömmlicher Reluktanzmaschinen 100'.

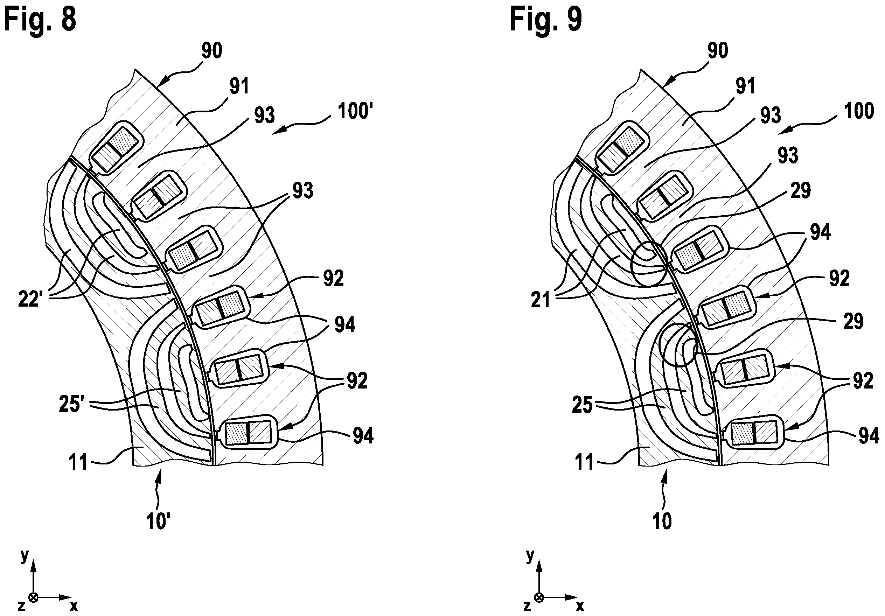

In den Darstellungen der Figuren 5 bis 10 sind in den Figuren 5 und 8 Teile von Querschnittsansichten herkömmlicher Reluktanzmaschinen 100' dargestellt.

Bei diesen Darstellungen sind auf der Innenseite des Stators 90 mit dem Statorkörper 91 in einer alternierenden Abfolge verschiedener Spulen 92 zur Erzeugung eines hier dreiphasigen Magnetfeldes ausgebildet. Im Inneren des Stators 90 befindet sich ein herkömmlicher Rotor 10' mit einer Abfolge herkömmlicher Barrierebereiche 20' mit herkömmlich ausgebildeten, also symmetrischen und nicht gedrehten Magnetflussbarrieren 22' und dazwischen vorgesehenen Magnetflussstegen 25'. Dies führt in dem in Figur 9 dargestellten Graphen 70 zu den Daten der Spur 71 mit den durch Dreiecke symbolisierten Datenpunkten. Die Spur 71 repräsentiert die Drehmomentwelligkeit als Schwankung des Drehmoments M, welches auf der Ordinate aufgetragen ist, als Funktion des auf der Abszisse aufgetragenen zeitlichen Verlaufs mit der Zeit t.

Dem gegenüber zeigt Figur 6 schematisch einen Ausschnitt einer Ausführungsform der erfindungsgemäßen Reluktanzmaschine 100 mit einem entsprechenden Stator 90 aus Figur 5, aber einem erfindungsgemäß ausgestalteten Rotor 10 mit in jedem Barrierebereich 20 gegeneinander verdreht ausgebildeten Magnetflussbarrieren 21, wobei bezüglich zwei in Umfangsrichtung direkt aufeinander folgenden Barrierebereichen 20 die Vorzeichen der Verdrehrichtungen jeweils umgekehrt sind.

Mit der in Figur 6 dargestellten Anordnung ergibt sich im Graph 70 die mit 72 bezeichnete Spur von Simulationswerten beim Bewerten der Drehmomentwelligkeit mit durch Quadrate symbolisierten Datenpunkten.

Bei den Darstellungen der Figuren 5 bis 7 handelt es sich um Synchronreluktanzmaschinen mit einem Stator 90 mit zwölf Zähnen 93 und zwölf Nuten 94, in denen jeweils eine Spule 92 untergebracht ist, so dass zwölf Spulen 92 vorliegen. und einem Rotor 10', 10 mit vier Polbereichen 30. Es ergibt sich bei der erfindungsgemäßen Anordnung aus Figur 6 im Endergebnis eine Drehmomentwelligkeit mit einer Reduktion um 38 % gegenüber der herkömmlichen Anordnung aus Figur 5, wobei das Drehmoment nur um 2 % abgesenkt ist.

Die Figuren 8 bis 10 zeigen die Anwendung der neuen Konfiguration für einen Rotor 10 für eine Reluktanzmaschine 100 mit einer Konfiguration mit 42 Zähnen 93 und Nuten 94 im Stator 90 und 14 Polen im Rotor 10', 10, wobei jeder Barrierebereich 20 drei Magnetfeldbarrieren 21 aufweist. In Figur 8 ist der herkömmliche Rotor 10' mit nicht gegeneinander verdrehten herkömmlichen Magnetflussbarrieren 22' dargestellt. Figur 9 zeigt dagegen einen erfindungsgemäßen Rotor 10, bei welchem die Magnetflussbarrieren 21 gegeneinander verdreht sind, wobei die Drehrichtung entsprechender Magnetflussbarrieren 21 in Umfangsrichtung direkt benachbarter Barrierebereiche 20 jeweils bei identischem Drehwinkel umgekehrt ist.

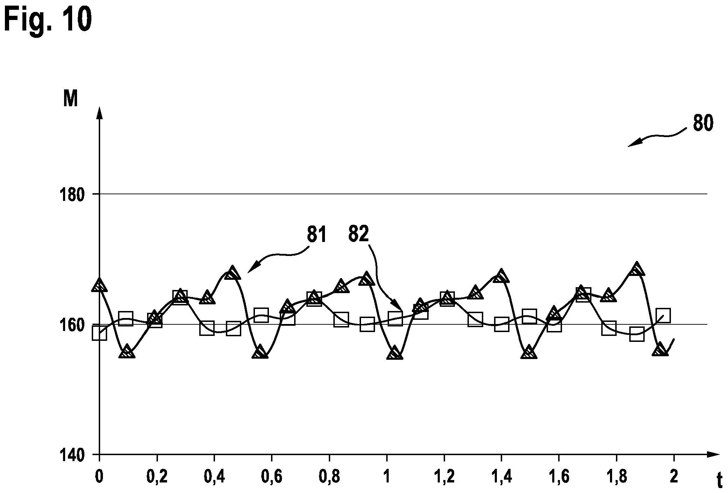

In Figur 10 wird im Graphen 80 das Ergebnis der Erfassung der Drehmomentwelligkeit bei der herkömmlichen Reluktanzmaschine 100' gemäß Figur 8 in der Spur 81 dargestellt, und zwar mit den durch Dreiecke symbolisierten Datenpunkten.

Die Spur 82 des Graphen 80 aus Figur 10 zeigt mit den durch Quadrate symbolisierten Datenpunkten die erfasste Drehmomentwelligkeit der Reluktanzmaschine 100 aus Figur 9. Es ergibt sich eine Reduktion der Drehmomentwelligkeit um 54 %, wobei das Drehmoment insgesamt nur um 1 % vermindert ist.

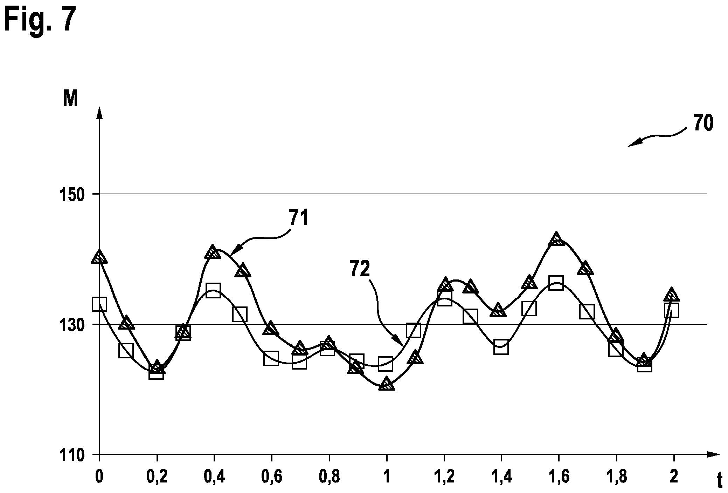

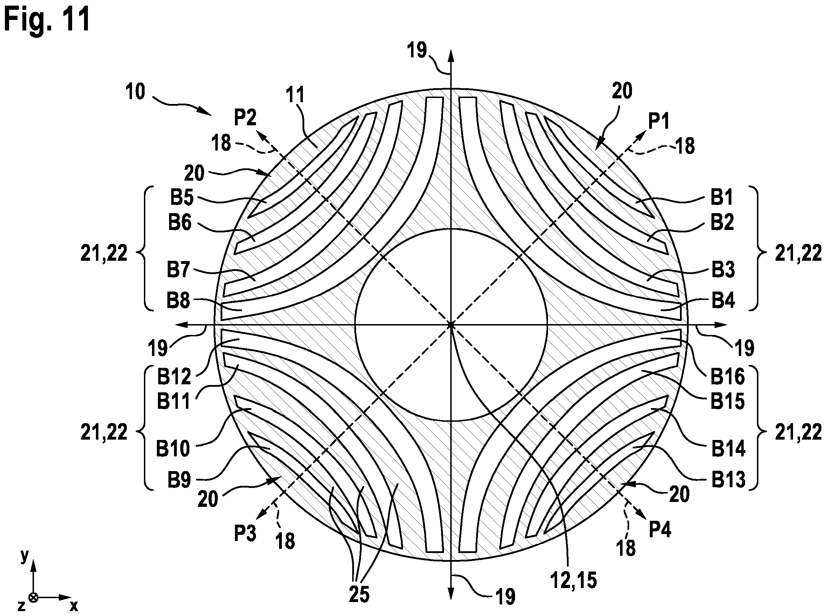

Figur 11 zeigt die im Zusammenhang mit Figur 6 und 7 verwendete Anordnung für einen erfindungsgemäßen Rotor 10 und illustriert insbesondere das Vorgehen zur optimalen Ausgestaltung der Anordnung der einzelnen verdrehten Magnetflussbarrieren 21 in Bezug aufeinander innerhalb eines jeweiligen Barrierebereichs 20 aber auch in Bezug auf zueinander benachbarten Barrierebereichen 20 des Rotors 10.

Diese und weitere Merkmale und Eigenschaften der vorliegenden Erfindung werden an Hand der folgenden Darlegungen weiter erläutert:
Die Erfindung betrifft den Bereich der elektrischen Maschinen, insbesondere die Synchron-Reluktanzmaschine. Einerseits werden Synchron-Reluktanzmaschinen (SynRM) schon heute als Pumpen- und Lüftermotoren eingesetzt (ABB, KSB) und könnten Anwendungen von SynRM in Windkraftanlagen und in der Elektromobilität sinnvoll sein.

Im Vergleich zu anderen Drehfeldmaschinen (Synchron-, Asynchronmaschinen) besitzen SynRMs einen einfacheren Aufbau und sie sind robuster und kostengünstiger. Diesen Vorteilen steht bisher jedoch eine erhöhte Drehmomentwelligkeit gegenüber.

Im Allgemeinen sollte die Drehmomentwelligkeit einer SynRM möglichst gering gehalten werden.

Das Bemühen einer Reduktion der Drehmomentwelligkeit hat bisher deutliche Einbußen des mittleren abgreifbaren Drehmomentes der Maschine zur Folge. Darüber hinaus wird dabei der Vorteil eines einfacheren Aufbaus der Maschine durch einen herkömmlicherweise komplizierten Rotor zunichte gemacht.

Konventionelle SynRM müssen auf Grund des zu hohen Drehmomentrippels geschrägt ausgeführt werden. Dies ist produktionstechnisch aufwendig und daher kostenintensiv.

Es ist eine Aufgabe der vorliegenden Erfindung, die Drehmomentwelligkeit von Reluktanzmaschinen und insbesondere von SynRM signifikant zu senken, ohne dass dabei das mittlere Drehmoment merklich reduziert ist und ohne den Vorteil einer einfachen Fertigung von SynRMs aufzugeben.

Gemäß FEM-Modellen kann unter Umständen sogar auf die Schrägung des Rotors und/oder des Stators verzichtet werden, so dass die Fertigung der SynRM noch günstiger wird.

Erfindungsgemäß wird die Aufgabe durch die Anwendung eines neuen Verfahrens zur Reduktion der Drehmomentwelligkeit auf den Rotor der SynRM gelöst.

Dabei werden einzelne Flussbarrieren jedes Rotorpols um den Mittelpunkt des Rotors, also die z-Achse rotiert.

Es ergeben sich eine Reduktion der Drehmomentwelligkeit ohne signifikante Drehmomenteinbußen, eine Anwendbarkeit auf alle Topologien von SynRM, und zwar unabhängig von Wicklung, Spulenzahl, Polzahl, Zahnzahl, Barrierenform, die Vermeidbarkeit einer Schrägung des Rotors und/oder des Stators.

Die Idee, die diesem Verfahren zur Grunde liegt, besteht darin, q-Achsen einzelner Flussbarrieren innerhalb eines Rotorpoles gegeneinander zu verschieben und somit eine Asymmetrie bezüglich der ursprünglich gemeinsamen q-Achse zu erzielen, wie dies in Figur 3 im Zusammenhang mit der Achse q1 gezeigt ist.

Figur 3 zeigt einen Teil eines abgewickelten Rotorpols einer erfindungsgemäßen SynRM 100. Es sind drei Magnetflussbarrieren 21, 22 ausgebildet. Ausgehend von einem herkömmlichen Rotor 10', dessen herkömmliche Magnetflussbarrieren 22' innerhalb eines Rotorpols eine Symmetrie um die gemeinsame Achse q1 aufweisen, werden die erfindungsgemäßen Magnetflussbarrieren 21 so gegeneinander um den Rotormittelpunkt 15 verdreht - in der abgewickelten Darstellung der Figur 3 verschoben - dass sie jeweils eine eigene Symmetrieachse qn mit Index n entsteht, wobei der Index n die Anzahl der Magnetflussbarrieren 21, 22 pro Barrierebereich 20 bezeichnet.

Folgendes ist zu beachten:
(1) Die n-te Magnetflussbarriere 21 wird um den Mittelpunkt 15 des Rotors 10 um einen Winkel - in Figur 3 mit xn bezeichnet - rotiert (keine lineare Bewegung).
(2) Grundsätzlich ist die Rotationsrichtung der Magnetflussbarrieren 21 frei wählbar. Alternierendes Vorzeichen bei der Rotationsrichtung wie in Figur 3 kann vorteilhaft sein.
(3) Es müssen nicht alle Magnetflussbarrieren 21, 22 rotiert sein oder werden.
(4) Die Form der Barrieren kann variiert werden, es können eckige, runde oder gemischte Formen verwendet werden, symmetrisch oder asymmetrisch zur jeweiligen Achse qn.
(5) Der Drehwinkel sollte im technisch sinnvollen Bereich gewählt werden und die Magnetflussbarrieren 21, 22 sollten sich nicht überschneiden oder überlappen.
(6) Das Design ist auf alle SynRM anwendbar.
(7) Die Erfindung ist auch auf Außenläufermaschinen anwendbar, bei welchen der Stator innen liegt und vom rotierbaren Rotor umgeben oder umschlossen ist.

Die Anwendung des Verfahrens bei 12/4- und 42/14-SynRM ist in den Figuren 4 bis 6 bzw. 8 bis 10 demonstriert. Die beiden Geometrien zeigen, um sicherzustellen, dass das Verfahren unabhängig von dem Wicklungstyp - konzentriert oder verteilt - und von der Polpaarzahl - niederpolig oder hochpolig - vorteilhaft einsetzbar ist.

Die Referenzmaschinen 100', insbesondere die Referenzrotoren 10', wurden nach bekannten Hinweisen zur Rotorauslegung ausgelegt und bereits für "relativ gut ausgelegt" empfunden.

### 12/4-SvnRM

Die Figuren 5 und 6 zeigen jeweils die halbe Geometrie der verwendeten 12/4-SynRM. Figur 5 beschreibt die herkömmliche Referenzmaschine 100' als Referenz. Figur 6 zeigt die erfindungsgemäße Reluktanzmaschine 100. Bei dieser wurden die Magnetflussbarrieren 21 der beiden abgebildeten Barrierebereiche 20 als Rotorpole nach dem oben beschriebenen Prinzip gegeneinander verschoben, wie dies durch die markierten Einzelheiten 29 beschrieben wird.

Die entsprechenden Drehmomentverläufe aus der Figur 7 zeigen, dass die Drehmomentwelligkeit um 38 % gegenüber der Drehmomentwelligkeit der Referenzmaschine 100' gesenkt werden konnte. Gleichzeitig sinkt das mittlere Drehmoment gegenüber der der Referenzmaschine 100' erfindungsgemäß nur um 2 %.

Prinzipiell kann jeder einzelne Barrierebereich 20 als Rotorpol zur Optimierung der Drehmomentwelligkeit genutzt werden. Um das Potential des Verfahrens aufzuzeigen und dabei die Optimierungsdauer kurz zu halten, wurden in dem vorgestellten Beispiel nur zwei Barrierebereiche 20 genutzt. Die Drehmomentwelligkeit kann weiter reduziert werden, wenn alle vier Barrierebereiche 20 des Rotors 10 genutzt werden.

### 42/14-SvnRM:

Figuren 8 und 9 zeigen die siebten Teile betrachteter 42/14-Topologien.

Figur 8 zeigt einen herkömmlichen Rotor 10' als Referenz. Figur 9 zeigt die Verwendung eines erfindungsgemäß ausgebildeten Rotor 10, bei diesem sind die Magnetflussbarrieren 21 wieder gegeneinander gedreht angeordnet, dies ist an den markierten Einzelheiten 29 erkennbar.

Wieder ist ein Vergleich der Drehmomentverläufe in Figur 10 dargestellt. In diesem Fall ist die Drehmomentwelligkeit um 54 % reduziert. Das mittlere Drehmoment ist um 1% abgesenkt.

Erfindungsgemäß besteht also die Möglichkeit, die Rotoren 10 einer Reluktanzmaschine 100 in Bezug auf die Drehmomentwelligkeit zu verbessern, und zwar unabhängig von der Wicklungsart und der Polpaarzahl der Maschine. Die häufig mit der Reduzierung der Drehmomentwelligkeit einhergehenden signifikanten Drehmomenteinbußen treten dabei nicht auf.

Das vorgestellte Verfahren kann sowohl auf selbst entworfene Rotoren, als auch auf bekannte Rotorformen angewendet werden.

### Effiziente Anwendung eines Optimierungsverfahrens

Die Anzahl und/oder die Anordnung gegen einander zu verdrehender Magnetflussbarrieren 21, 22 an einem Rotor 10 und das Maß und die Orientierung der Verdrehung können im Sinne eines Optimierungsverfahrens gewählt werden, um bei besonders geringen Drehmomenteinbußen eine besonders geringe Drehmomentwelligkeit zu erzielen.

Dies wird im Folgenden genauer erläutert.

Dabei ist gegeben ein
- erfindungsgemäßer 2p-poliger Rotor 10 mit N Magnetflussbarrieren 21, 22 pro Barrierebereich 20 oder Pol, gemäß Figur 11 also mit 2p = 4; N = 4.
- Es sind insgesamt 2p·N Magnetflussbarrieren 21, 22 und somit 2p·N mögliche Winkel für die Optimierung vorhanden (2p·N Freiheitsgrade) vorhanden. Im Beispiel der Figur 11 sind das 16 Magnetflussbarrieren 21, 22.
- Die Magnetflussbarrieren 21, 22 sind in Figur 11 auch mit B1 bis B16 bezeichnet.
- Die 16 Winkel sind mit *ϕB*1 bis *ϕB*16 bezeichnet.

In diesem Fall kann das Optimieren wie folgt durchgeführt werden:
(1) Barrieren 21, 22 gegenüberliegender Pole, z.B.: P1 und P3, erhalten gleiche Rotationswinkel. D.h. hier: *ϕB*1 = *ϕB*9, *ϕB*2 = *ϕB*10, *ϕB*3 = *ϕB*11*, ϕB*4 = *ϕB*12, , *ϕB*5 = *ϕB*13, *ϕB*6 *= ϕ*B14, *ϕB*7 = *ϕB*15, *ϕB*8 *= ϕB*16. Es werden nur zwei unmittelbar benachbarte Pole (z.B.: P1 und P2) optimiert. D.h., man optimiert zuerst P1 und P2 wie beschrieben und setzt die Optimierung dann reihum fort, z.B. mit P3 und P4, P5 und P6 usw.
(2) Ausgangspunkt der Optimierung ist die Bedingung: Alle Winkel sind null, d.h. *ϕBj =* 0.
Schritt 1: Pol P1 optimieren, bei B1 anfangen.
   Schritt 1.1: optimales *ϕB*1 finden.
   Schritt 1.2: *ϕB*2 = 0 lassen.
   Schritt 1.3: optimales *ϕB*3 finden. Ist *ϕB*1 *>* 0, so ist *ϕB*3 *<* 0.
   Schritt 1.4: *ϕB*4 = 0 lassen.
Schritt 2: Pol P2 optimieren, bei B6 anfangen (B5 überspringen).
   Schritt 2.1: *ϕB*5 = 0 lassen.
   Schritt 2.2: optimales *ϕB*6 finden. Ist *ϕB*1 *>* 0, so ist *ϕB*6 *>* 0.
   Schritt 2.3: *ϕB*7 = 0 lassen.
   Schritt 2.4: optimales *ϕB*8 finden. Ist *ϕB*6 *>* 0, so ist *ϕB*8 *<* 0 .

(3) An einer 12/4-Maschine können z.B. angewendet werden:

| | | | |
|---|---|---|---|
| *ϕB*1 = +2,5° | *ϕB*2 = 0° | *ϕB*3 = -2,25° | *ϕB*4 *=* 0° |
| *ϕB*5 = 0° | *ϕB*6 = +1,75° | *ϕB*7 = 0° | *ϕB*8 = -0,5° |

(4) Es ergibt sich ein Drehmoment M=128.5 Nm mit 9.8% Rippel.
(5) Einen optimalen Wert *ϕBj* zu finden bedeutet: Es wird eine Simulation für einen Rotor 10 durchgeführt, bei der nur die Magnetfeldbarriere Bj im Winkel *ϕBj* variiert wird und alle anderen Barrieren verbleiben beim Winkel 0 unverändert. Der Winkel *ϕBj,* bei dem die Drehmomentwelligkeit minimal ist, stellt die Lösung dar.
(6) Wenn das Vorzeichen für *ϕBj* vorgeschrieben ist werden nur Variationen mit dem entgegengesetzten Vorzeichen für *ϕBj* + 2 als Randbedingung zugelassen. Ist ein mit Vorzeichen behafteter Winkel *ϕBj* für die Barriere Bj gefunden, so ist der Rotationswinkel *ϕBj* + 2 der als nächstes zu optimierenden Barriere Bj+2 mit einem entgegengesetzten Vorziechen - bezogen auf das Vorzeichen von *ϕBj* - zu suchen. D.h., die Vorzeichen von *ϕBj* und *ϕBj* + 2 sind unterschiedlich. Zu *ϕBj* gleichgerichtete Werte von *ϕBj* + 2 werden ignoriert.
(7) Mit gesteigertem Aufwand lässt sich eine weitere Optimierung erzielen: (a) Die zu Null gesetzten bzw. ausgelassenen Winkel können variiert werden und/oder (b) die gegenüberliegenden Pole müssen nicht mehr identisch ausgestaltet sein.

Neben der vorstehenden schriftlichen Beschreibung der Erfindung wird zu deren ergänzender Offenbarung hiermit explizit auf die zeichnerische Darstellung der Erfindung in den Fig. 1 bis 10 Bezug genommen.

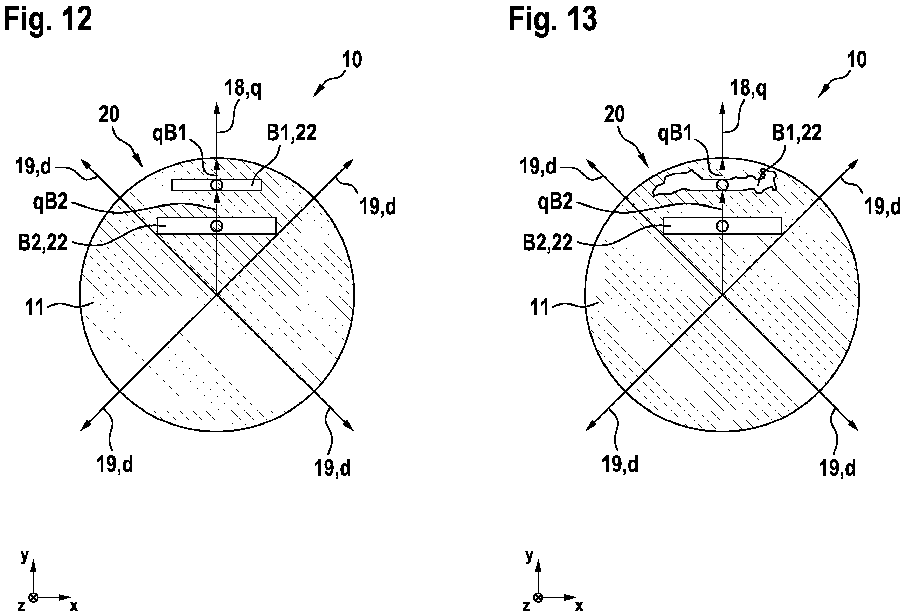

Die Figuren 12 bis 14 sind schematische Ansichten von Rotoren 10 zur Erläuterung des Begriffes der q-Achse bei einer einzelnen Magnetflussbarriere 21, 22. Diese werden dort wieder mit B1 und B2, ihre q-Achsen 13, 14 entsprechend mit qB1, qB2 bezeichnet.

Zur Definition der q-Achsen von einzelnen Magnetflussbarrieren B1, B2 ist zu beachten, dass zwischen zwei d-Achsen 19 eines Rotors 10 als Ganzes immer eine q-Achse 18 des Rotors 10 als Ganzes liegt.

Bei an sich symmetrischen, also achsensymmetrischen Magnetflussbarrieren B1, B2 des Rotors 10 gilt, dass die so genannten q-Achsen 13, 14 der Magnetflussbarrieren B1, B2 als solche, also die Achsen qB1 und qB2 in Figur 12, mit der q-Achse 18 des gesamten Rotors 10 zusammenfallen, also mit der q-Achse 18 des gesamten Rotors 10 deckungsgleich sind. Dabei liegt der Ursprung dieser Achsen qB1, qB2 jeweils im Schwerpunkt der jeweiligen Barriere B1, bzw. B2.

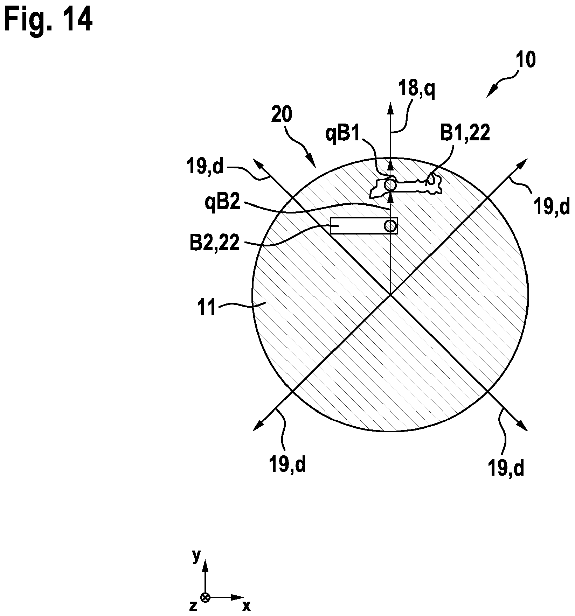

Bei asymmetrischen, also nicht achsensymmetrischen Magnetflussbarrieren B1, B2 fallen die so genannten q-Achsen der Magnetflussbarrieren B1, B2, also die Achsen qB1 und qB2 in den Figuren 13 und 14, ebenfalls mit der q-Achse 18 des gesamten Rotors 10 zusammen und sind mit der q-Achse 18 des gesamten Rotors 10 deckungsgleich. Jedoch liegt nun der Ursprung dieser Achsen qB1, qB2 auf Grund der Asymmetrie der Barrieren B1, B2 nicht mehr im Schwerpunkt der jeweiligen Barriere B1, B2, sondern dort, wo der Schwerpunkt wäre, wenn eine Symmetrie zur q-Achse 18 des gesamten Rotors 10 vorläge.

Fazit: Es geht nur um den Ursprung der q-Achsen qB1 und qB2 der einzelnen Barrieren B1, B2. Auch wenn die Barrieren B1, B2 asymmetrisch zur q-Achse 18 des Rotors 10 sind, liegt der Ursprung der Achsen qB1 und qB2 der Magnetfeldbarrieren B1, B2 dort, wo er bei Symmetrie läge.

Auf der Grundlage der so bestimmbaren q-Achsen 13, 14 bzw. qBj der Magnetflussbarrieren 21, 22 bzw. Bj wird dann die erfindungsgemäß vorgesehene gegenseitige Verdrehung innerhalb eines gegebenen Barrierebereichs 20 - wie oben dargelegt - definiert.

## Patentansprüche

1. Rotor (10) für eine Reluktanzmaschine (100), mit:
- einem um eine durch einen Rotormittelpunkt (15) verlaufende Rotorachse (12) herum im Wesentlichen kreisscheibenförmigen Rotorkörper (11) und
- einer in Umfangsrichtung des Rotorkörpers (11) alternierenden Abfolge von Barrierebereichen (20) und Polbereichen (30),
- wobei jeder Barrierebereich (20) wenigstens drei räumlich und materiell getrennte und nicht überlappende Magnetflussbarrieren (21, 22) aufweist,
- innerhalb mindestens eines Barrierebereichs (20) mindestens eine Magnetflussbarriere (21) mit einer q-Achse (13) und/oder Figurenachse (13) gegenüber einer q-Achse (13, 14) und/oder Figurenachse (13, 14) einer anderen Magnetflussbarriere (22, 21) desselben Barrierebereichs (20) um die Rotorachse (12) gedreht angeordnet ist,
- bei welchem mehrere Magnetflussbarrieren (22) desselben Barrierebereichs (20) mit ihren q-Achsen (13) und/oder Figurenachsen (13) gegenüber einer q-Achse (13, 14) und/oder Figurenachse (13, 14) einer anderen Magnetflussbarriere (22, 21) desselben Barrierebereichs (20) um die Rotorachse (12) gedreht angeordnet sind, wobei
- die Drehwinkel denselben Wert oder unterschiedliche Werte aufweisen, **dadurch gekennzeichnet, dass**
die Drehrichtung der Magnetflussbarrieren (22) eines Barrierebereichs (20), bezogen auf eine in radialer Richtung des Rotors (10) angeordnete innere Magnetflussbarriere (21), eine unterschiedliche ist.

2. Rotor (10) nach Anspruch 1,
- bei welchem ein oder mehrere Magnetflussbarrieren (22, 21) unterschiedlicher Barrierebereiche (20) mit ihren q-Achsen (13) und/oder Figurenachsen (13) gegenüber einer q-Achse (13, 14) und/oder Figurenachse (13, 14) einer anderen Magnetflussbarriere (22, 21) eines jeweils selben Barrierebereichs (20) um die Rotorachse (12) gedreht angeordnet sind,
- wobei die Drehwinkel denselben Wert oder unterschiedliche Werte aufweisen und/oder die Drehrichtung dieselbe oder eine unterschiedliche ist, und zwar jeweils verglichen mit entsprechenden Drehwinkeln bzw. Drehrichtungen ein oder mehrere anderer Barrierebereiche (20).

3. Rotor (10) nach einem der vorangehenden Ansprüche,
welcher eine gerade Anzahl von Barrierebereichen (20) aufweist.

4. Rotor (10) nach einem der vorangehenden Ansprüche,
bei welchem unterschiedliche Barrierebereiche (20) bis auf eine Drehung um die Rotorachse (12)
- zueinander identisch oder
- zu einer Achse spiegelsymmetrisch sind, insbesondere in Bezug auf zur Deckung gebrachte q-Achsen oder Figurenachsen der Barrierebereiche (20).

5. Rotor (10) nach einem der vorangehenden Ansprüche,
bei welchem eine Magnetflussbarriere (21, 22) eines Barrierebereichs (20) zu ihrer q-Achse (13, 14) und/oder Figurenachse (13, 14) spiegelsymmetrisch oder asymmetrisch aufgebaut ist.

6. Rotor (10) nach einem der vorangehenden Ansprüche,
bei welchem Drehwinkel und/oder Drehrichtungen von q-Achsen (13) und/oder Figurenachsen (13) einer oder mehrerer Magnetflussbarrieren (21, 22) gegenüber q-Achsen (13, 14) und/oder Figurenachsen (13, 14) anderer Magnetflussbarrieren (21, 22) desselben Barrierebereichs (20) so gewählt sind, dass sich im Betrieb des Rotors (10) im Vergleich zu einem Rotor (10') mit einer Konfiguration ohne Verdrehung von Magnetflussbarrieren (20') eine verringerte und insbesondere minimale Drehmomentwelligkeit einstellt.

7. Verfahren zum Herstellen eines Rotors (10) nach einem der Ansprüche 1 bis 6, bei welchem Drehwinkel und/oder Drehrichtungen von q-Achsen (13) und/oder Figurenachsen (13) einer oder mehrerer Magnetflussbarrieren (21, 22) gegenüber q-Achsen (13, 14) und/oder Figurenachsen (13, 14) anderer Magnetflussbarrieren (21, 22) desselben Barrierebereichs (20) so gewählt werden, dass sich im Betrieb des Rotors (10) im Vergleich zu einem Rotor (10') mit einer Konfiguration ohne Verdrehung von Magnetflussbarrieren (20') eine verringerte und insbesondere minimale Drehmomentwelligkeit einstellt.

8. Reluktanzmaschine (100), mit:
- einem Stator (90) zur Erzeugung eines primären Magnetfeldes und/oder zum Induzieren eines sekundären Magnetfeldes und
- mindestens einem Rotor (10) nach einem der Ansprüche 1 bis 6, welcher drehbar zur Drehung um die Rotorachse (12) gelagert ist und vom Stator (90) zur magnetischen Wechselwirkung umgeben ist oder einen solchen Stator (90) umgibt.

9. Reluktanzmaschine (100) nach Anspruch 8,
bei welcher der Stator (90) mit einer konzentrierten Wicklung ausgebildet ist.

10. Reluktanzmaschine (100) nach Anspruch 8 oder 9,
welche als Motor und/oder als Generator oder als Teil eines Motors und/oder Generators ausgebildet ist.

11. Arbeitsmaschine,
- welche eine Reluktanzmaschine (100) nach einem der Ansprüche 8 bis10 als Motor und/oder als Generator oder als Teil eines Motors und/oder Generators in einem Antrieb oder Aggregat aufweist und
- welche insbesondere als Fahrzeug ausgebildet ist.

## Claims

1. Rotor (10) for a reluctance machine (100), having:
- a rotor body (11) which is substantially disc-shaped around a rotor axis (12) running through a rotor centre point (15), and
- a sequence of barrier regions (20) and pole regions (30) alternating in the circumferential direction of the rotor body (11),
- wherein each barrier region (20) has at least three magnetic flux barriers (21, 22) which are spatially and materially separate and do not overlap,
- within at least one barrier region (20), at least one magnetic flux barrier (21) is arranged with a q axis (13) and/or figure axis (13) rotated about the rotor axis (12) with respect to a q axis (13, 14) and/or figure axis (13, 14) of another magnetic flux barrier (22, 21) of the same barrier region (20), and
- in which a plurality of magnetic flux barriers (22) of the same barrier region (20) are arranged with their q axes (13) and/or figure axes (13) rotated about the rotor axis (12) with respect to a q axis (13, 14) and/or figure axis (13, 14) of another magnetic flux barrier (22, 21) of the same barrier region (20), wherein
- the rotational angles have the same value or different values, **characterized in that**
the direction of rotation of the magnetic flux barriers (22) of a barrier region (20), based on an inner magnetic flux barrier (21) arranged in the radial direction of the rotor (10), is different.

2. Rotor (10) according to Claim 1,
- in which one or more magnetic flux barriers (22, 21) of different barrier regions (20) are arranged with their q axes (13) and/or figure axes (13) rotated about the rotor axis (12) with respect to a q axis (13, 14) and/or figure axis (13, 14) of another magnetic flux barrier (22, 21) of a respective same barrier region (20),
- wherein the rotational angles have the same value or different values, and/or the direction of rotation is the same or different, to be precise in each case compared with corresponding rotational angles and/or directions of rotation of one or more other barrier regions (20).

3. Rotor (10) according to either of the preceding claims,
which has an even number of barrier regions (20).

4. Rotor (10) according to one of the preceding claims, in which, with the exception of a rotation about the rotor axis (12), different barrier regions (20)
- are identical to one another or
- are mirror-symmetrical in relation to an axis, in particular with respect to q axes or figure axes, moved into congruence, of the barrier regions (20).

5. Rotor (10) according to one of the preceding claims, in which a magnetic flux barrier (21, 22) of a barrier region (20) is of mirror-symmetrical or asymmetrical design in relation to its q axis (13, 14) and/or figure axis (13, 14).

6. Rotor (10) according to one of the preceding claims, in which rotational angles and/or directions of rotation of q axes (13) and/or figure axes (13) of one or more magnetic flux barriers (21, 22) with respect to q axes (13, 14) and/or figure axes (13, 14) of other magnetic flux barriers (21, 22) of the same barrier region (20) are selected in such a way that during the operation of the rotor (10) a reduced and, in particular, minimum torque ripple occurs in comparison with a rotor (10') having a configuration without rotation of magnetic flux barriers (20').

7. Method for producing a rotor (10) according to one of Claims 1 to 6,
in which rotational angles and/or directions of rotation of q axes (13) and/or figure axes (13) of one or more magnetic flux barriers (21, 22) with respect to q axes (13, 14) and/or figure axes (13, 14) of other magnetic flux barriers (21, 22) of the same barrier region (20) are selected in such a way that during operation of the rotor (10) a reduced and, in particular, minimum torque ripple occurs in comparison with a rotor (10') having a configuration without rotation of magnetic flux barriers (20').

8. Reluctance machine (100), having:
- a stator (90) for generating a primary magnetic field and/or for inducing a secondary magnetic field, and
- at least one rotor (10) according to one of Claims 1 to 6, which is mounted so as to be rotatable in relation to the rotation about the rotor axis (12) and is surrounded by the stator (90), or surrounds such a stator (90), for the purpose of magnetic interaction.

9. Reluctance machine (100) according to Claim 8,
in which the stator (90) is formed with a concentrated winding.

10. Reluctance machine (100) according to Claim 8 or 9, which is in the form of a motor and/or a generator or part of a motor and/or generator.

11. Working machine
- which has a reluctance machine (100) according to one of Claims 8 to 10 in the form of a motor and/or a generator or part of a motor and/or generator in a drive or assembly, and
- which is in the form, in particular, of a vehicle.

## Revendications

1. Rotor (10) pour une machine à reluctance (100), comprenant :
- un corps de rotor (11) substantiellement en forme de disque circulaire autour d'un axe de rotor (12) passant par un centre de rotor (15), et
- une série de zones de barrière (20) et de zones polaires (30) alternant dans la direction circonférentielle du corps de rotor (11),
- chaque zone de barrière (20) présentant au moins trois barrières de flux magnétique (21, 22) séparées spatialement et matériellement et ne se recouvrant pas,
- à l'intérieur d'au moins une zone de barrière (20), au moins une barrière de flux magnétique (21) dotée d'un axe q (13) et/ou d'un axe de figure (13) étant disposée en rotation autour de l'axe de rotor (12) par rapport à un axe q (13, 14) et/ou un axe de figure (13, 14) d'une autre barrière de flux magnétique (22, 21) de la même zone de barrière (20),
- dans lequel plusieurs barrières de flux magnétique (22) de la même zone de barrière (20) sont disposées en rotation autour de l'axe de rotor (12) par leurs axes q (13) et/ou axes de figure (13) par rapport à un axe q (13, 14) et/ou un axe de figure (13, 14) d'une autre barrière de flux magnétique (22, 21) de la même zone de barrière (20), dans lequel
- les angles de rotation présentent la même valeur ou des valeurs différentes,
**caractérisé en ce que** le sens de rotation des barrières de flux magnétique (22) d'une zone de barrière (20) est différent par rapport à une barrière de flux magnétique (21) intérieure, disposée dans le sens radial du rotor (10).

2. Rotor (10) selon la revendication 1,
- dans lequel une ou plusieurs barrières de flux magnétique (22, 21) de différentes zones de barrière (20) sont disposées en rotation autour de l'axe de rotor (12) par leurs axes q (13) et/ou axes de figure (13) par rapport à un axe q (13, 14) et/ou un axe de figure (13, 14) d'une autre barrière de flux magnétique (22, 21) d'une zone de barrière (20) respectivement identique,
- les angles de rotation présentant la même valeur ou des valeurs différentes, et/ou le sens de rotation étant le même ou différent, notamment respectivement en comparaison avec des angles de rotation ou des sens de rotation correspondants d'une ou de plusieurs autres zones de barrière (20).

3. Rotor (10) selon l'une quelconque des revendications précédentes, qui présente un nombre pair de zones de barrière (20).

4. Rotor (10) selon l'une quelconque des revendications précédentes, dans lequel, mise à part une rotation autour de l'axe de rotor (12), différentes zones de barrière (20) sont
- identiques les unes aux autres, ou
- symétriques par rapport à un axe, en particulier par rapport à des axes q ou des axes de figure des zones de barrière (20) mis en coïncidence.

5. Rotor (10) selon l'une quelconque des revendications précédentes, dans lequel une barrière de flux magnétique (21, 22) d'une zone de barrière (20) est réalisée de manière symétrique ou asymétrique par rapport à son axe q (13, 14) et/ou son axe de figure (13, 14) .

6. Rotor (10) selon l'une quelconque des revendications précédentes, dans lequel les angles de rotation et/ou les sens de rotation des axes q (13) et/ou des axes de figure (13) d'une ou de plusieurs barrières de flux magnétique (21, 22) sont sélectionnés par rapport aux axes q (13, 14) et/ou aux axes de figure (13, 14) d'autres barrières de flux magnétique (21, 22) de la même zone de barrière (20) de telle sorte que pendant le fonctionnement du rotor (10), il en résulte une ondulation du couple diminuée, et en particulier minimale, en comparaison avec un rotor (10') ayant une configuration sans rotation des barrières de flux magnétique (20').

7. Procédé de fabrication d'un rotor (10) selon l'une quelconque des revendications 1 à 6, dans lequel les angles de rotation et/ou les sens de rotation des axes q (13) et/ou des axes de figure (13) d'une ou de plusieurs barrières de flux magnétique (21, 22) sont sélectionnés par rapport aux axes q (13, 14) et/ou aux axes de figure (13, 14) d'autres barrières de flux magnétique (21, 22) de la même zone de barrière (20) de telle sorte que pendant le fonctionnement du rotor (10), il en résulte une ondulation du couple diminuée, et en particulier minimale, en comparaison avec un rotor (10') ayant une configuration sans rotation des barrières de flux magnétique (20').

8. Machine à reluctance (100), comprenant :
- un stator (90) pour générer un champ magnétique primaire et/ou pour induire un champ magnétique secondaire, et
- au moins un rotor (10) selon l'une quelconque des revendications 1 à 6, qui est monté rotatif pour une rotation autour de l'axe de rotor (12) et est entouré par le stator (90) ou entoure un tel stator (90) pour une interaction magnétique.

9. Machine à reluctance (100) selon la revendication 8, dans laquelle le stator (90) est réalisé avec un enroulement concentrique.

10. Machine à reluctance (100) selon la revendication 8 ou 9, qui est réalisée sous la forme d'un moteur et/ou d'un générateur ou d'une partie d'un moteur et/ou d'un générateur.

11. Machine de travail,
- qui présente une machine à reluctance (100) selon l'une quelconque des revendications 8 à 10 sous la forme d'un moteur et/ou d'un générateur ou d'une partie d'un moteur et/ou d'un générateur dans un dispositif d'entraînement ou un agrégat, et
- qui est réalisée en particulier sous la forme d'un véhicule.
